Europäisches Patentamt

European Patent Office

Office européen des brevets

(11) Publication number: **0 278 554**
**A2**

# (12) EUROPEAN PATENT APPLICATION

(21) Application number: **88200160.5**

(22) Date of filing: **01.02.88**

(51) Int. Cl.⁴: **G01D 21/02**

(30) Priority: **12.02.87 SE 8700558**

(43) Date of publication of application:
**17.08.88 Bulletin 88/33**

(84) Designated Contracting States:
**DE FR GB IT**

(71) Applicant: **SCANPUMP AB**
**Krokslätts Parkgata 4 P.O. Box 2053**
**S-431 02 Mölndal(SE)**

(72) Inventor: **Andersson, Ingemar**
**12 Norra Posthemsvägen**
**S-552 77 Jönköping(SE)**

(74) Representative: **Ahlström, Erik**
**AHLPATENT AB Hemstigen 21**
**S-55266 Jönköping(SE)**

(54) Transmitter for surveying the operative condition of a movable shaft or spindle.

(57) This invention relates to a sensor or transmitter for surveying or monitoring the operative condition of a pump wheel shaft or another movable shaft. The sensor is a combination sensor comprising at least three individual sensors (13 + 14, 17, 35) which are built together into a common unit. The combination sensor unit has only one mounting, common to all of the individual sensors, in a bearing bracket or the like in which said shaft is journalled. Hereby the mechanical machining of the bearing bracket required for the mounting of the sensors therein is considerably reduced and simplified.

FIG.3

# Transmitter for Surveying the Operative Condition of a Movable Shaft or Spindle

## Background of the Invention

This invention relates to a sensor or transmitter for surveying or monitoring the operative condition of a movable shaft or spindle. In this instance the sensor is a combination sensor comprising at least two individual sensors which are built together into a common unit. The statement that the shaft is "movable" is presumed to mean that it can rotate, oscillate or carry out a reciprocatary movement.

For measuring and surveyance of the kind in question there is for the time being utilized one sensor for each quantity to be measured and/or surveyed, e.g. rotational speed, vibration level, temperature and rotational speed. These sensors have up till now been secured to or mounted in different points of a bearing housing or the like and been provided with individual leads for transmitting the measurements results to a common surveyance or operation central. Such constructions necessitate extensive and expensive mechanical machining of the bearing housing in particular as well as rather complicated wiring.

## Summary of the Invention

In view hereof the principal object of the invention is to eliminate the above drawbacks of known surveyance systems and to provide a simpler and less expensive unit for such surveyance. This object is attained thanks to the fact that the sensor according to the invention is so constructed as is set forth in the characterizing clause of claim 1.

With the combination sensor unit according to the invention there is gained in the first instance a considerable saving in costs, since only one machining operation has to be carried out for the connection of the sensor unit to the bearing housing or the like surrounding the shaft or spindle, and since only one cable has to be laid out from the sensor to the operation central, instead of several cables.

The sensor according to the invention may be made as well for rotating and oscillating machines as for machines having a reciprocating shaft. The combination sensor unit is, however, intended particularly for pump shafts. The sensor may also be made in the protection form IP 65, which means dust-proof and flush-proof in respect of protection against penetrating water.

## Brief Description of the Drawings

Further features and advantages of the sensor or transmitter according to the invention will become apparent from the following detailed description and the annexed drawings, which diagrammatically and as non-limiting example illustrate a couple of embodiments of the invention.

Fig. 1 is an axial longitudinal section of a bearing to be surveyed and comprising a combination sensor unit according to the invention and diagrammatically shown in a side view.

Fig. 2 illustrates a first embodiment of a sensor which is designed according to the invention and shown partly in an axial longitudinal section and partly in a side view.

Fig. 3 is a view corresponding to Fig. 2 of a second embodiment of the sensor unit according to the invention.

## Description of the preferred Embodiments

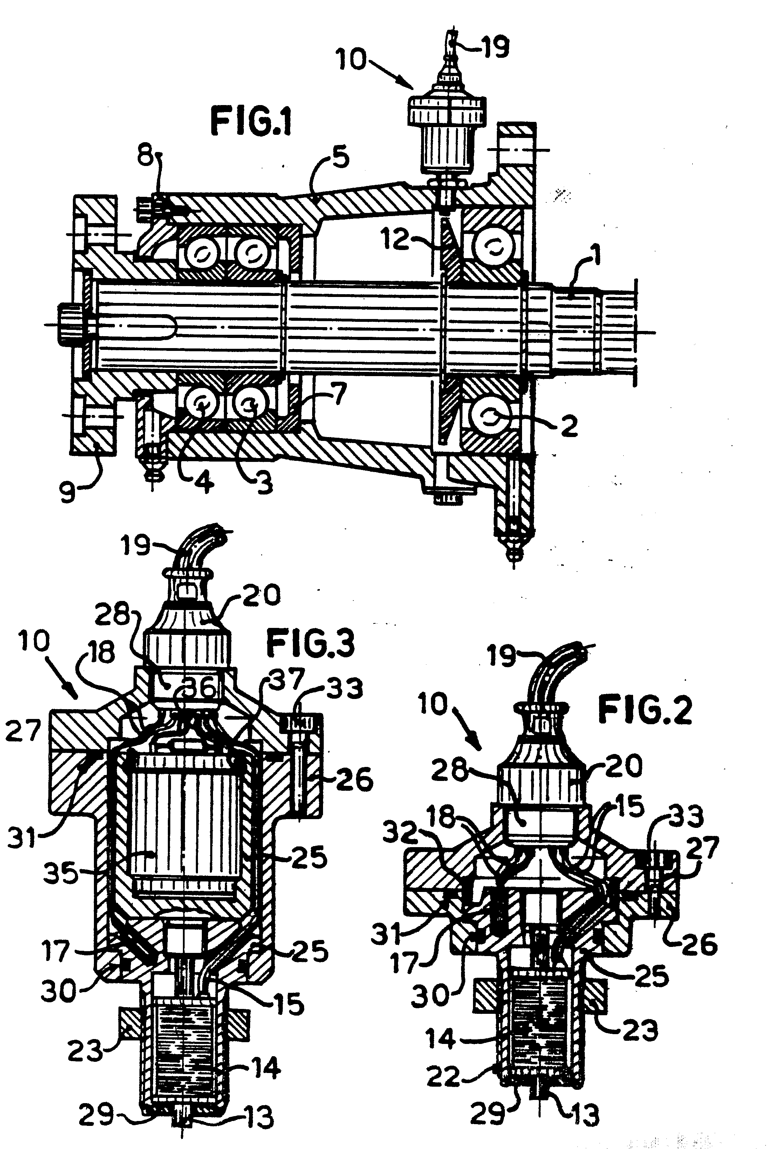

In Fig. 1 there is shown a shaft or spindle 1 which e.g. may be a pump wheel shaft and which is journalled in ball bearings 2, 3, 4 in a bearing bracket 5. 7 designates a sealing ring, 8 a bearing cap and 9 a bearing-half. In the bearing bracket 5 there is fitted in according to the invention a combination sensor unit which is generally designated 10. Within the bearing unit a multi-edged disc 12 of a magnetic material is non-rotatably secured to the shaft 1. The disc 12 cooperates with a sensor for rotational speed which is comprised in the combination sensor unit and which (Fig. 2) comprises a magnet core 13 and a winding 14 surrounding the core. When the shaft 1 and the disc 12 rotate the corners of discontinuties of the disc give rise to alterations in the magnetic field in the winding 14 and pulses therein caused by said alterations, said pulses being led out through leads 15. The puls frequence constitutes a measure of the rotational speed (r/m) of the shaft 1. If the magnetic disc is made unsymmetrical according to one embodiment of the invention, the pulse sequence of the sensor 13, 14 also indicates the rotational direction of the shaft 1.

The combination sensor unit according to Fig. 2 also comprises a sensor 17 designed for indication of temperature and having leads 18. All leads (15, 18) for the sensors (13 + 14 and 17) comprised in the combination sensor unit 10 are assembled in a cable 19, which is connected to the sensor unit 10 by means of a cable terminal connection 20.

The sensor 10 is preferably threaded into the bearing bracket 5 (or corresponding member) by means of threads 22 and secured with a nut 23. For the rest 25 in Fig. 2 designates a sensor housing, 26 a protective shell, 27 a cover, 28 a contact member, 29 a locking washer, 30 and 31 O-rings, 32 a distance ring and 33 a screw which secures the cover 27 to the protective shell 26.

The embodiment according to Fig. 3, in which same reference numerals as in Fig. 2 are utilized to designate same or similar details, differs from that described above principally in that it has been supplemented with a further sensor 35 for indication of the vibration level and appurtenant leads 36 which like the leads 15, 18 are comprised in the cable 19. The sensor 35 is held or secured by means of a locking ring 37.

The individual sensors or transducers which are exemplified by the sensors 13 + 14, 17 and 35 are known per se and have therefore not been more explicitly described.

The cable 19 preferably leads to a panel having displaying and/or recording instruments which may be interconnected in a computer system and supplemented with alarm devices.

Thanks to the combination sensor unit according to the invention the operational and maintenance surveyance of movable shafts or spindles and appurtenant bearings is simplified to a great extent, whereby failures and breakdowns may be precluded.

The embodiments described above and illustrated on the drawings are, of course, to be regarded merely as non-limiting example and may as to their details be modified in several ways within the scope of the following claims. In particular, the number and nature of the different component-sensors comprised in the combination sensor unit maybe varied, e.g. in dpeendence of the need of surveyance and the movement pattern of the surveyed shaft or spindle.

## Claims

1) A sensor or transmitter for surveying or monitoring the operative condition of a pump wheel shaft or another movable shaft, said sensor being a combination sensor comprising at least two individual sensors which are built together into a common unit, **characterized** in that the combination sensor unit comprises sensors (13 + 14, 17, 35) for at least three different quantities, of which one is rotational speed or rotational direction, and in that the combination sensor unit has only one mounting, common to all of its individual sensors, in a bearing bracket or the like in which said shaft is journalled.

2) Sensor according to claim 1, **characterized** in that it comprises individual sensors for rotational speed (13 + 14), temperature (17) and rotational direction.

3) Sensor according to claim 1 or 2, **characterized** in that it comprises sensors for rotational speed (13 + 14), vibration level (35), temperature and rotational direction (13 + 14).

4) Sensor according to any of claims 1 - 3, **characterized** in that it is connected to a cable (19) which contains leads from the individual sensors comprised in the combination sensor unit, and extends to a surveyance or operation central.

0 278 554

FIG.1

FIG.3

FIG.2